# EUROPEAN PATENT APPLICATION

(11) **EP 2 555 095 A2**
(43) Date of publication of application: **06.02.2013**
(21) Application number: 11193916.1
(22) Date of filing: 16.12.2011
(51) Int. Cl.: G06F 3/047

(54) **Touch panel and method for manufacturing the same**

(30) Priority: 03.08.2011 KR 20110077473
(71) Applicant: Pantech Co., Ltd., Seoul (KR)
(72) Inventor: Lee, Young-Hoon, Seoul (KR); Kim, Myeong-Je, Seoul (KR)
(74) Representative: Jordan, Volker Otto Wilhelm

(57) **Abstract**

A touch panel includes a firstsubstrate having a plurality of lower electrodes; a second substrate spaced a distance apart from the lower substrate and having a plurality of upper electrodes that correspond to the lower electrodes; a conductive rubber layer interposed between the lower electrodes and the upper electrodes; and a plurality of organic transistors interposed between the lower electrodes and the upper electrodes and to be connected to a top or bottom portion of the conductive rubber layer.

## Description

### CROSS-REFERENCE TO RELATED APPLICATION

This application claims priority from and the benefit under 35 U.S.C. §119(a) of Korean Patent Application No. 10-2011-0077473, filed on August 3, 2011, which is incorporated by reference for all purposes as if fully set forth herein.

### BACKGROUND

FIELD

This disclosure relates to a user input apparatus, and more particularly, to a touch panel and an electronic device including the touch panel, and a method for manufacturing the same.

DISCUSSION OF THE BACKGROUND

Touch panels are an example of a type of input device that determines whether an input of a user has been received and detects the location of the input by sensing any touch thereon. A user may input data or signals to a touch panel by touching or pressing an area on the touch panel using a finger, a stylus pen, or the like. For example, touch panels may be used in place of a mouse as a touch pad for a notebook computer or a netbook computer, or may be used in place of input switches for an electronic device. A touch panel may be formed in one body with a display. A touch panel installed on the display surface, such as a liquid crystal display (LCD), a plasma display panel (PDP), a cathode ray tube (CRT) or the like, is generally referred to as a touch screen. A touch screen may be incorporated into a display as a display surface or may be attached onto the display surface.

In certain situations, touch panels may be implemented instead of mechanical user input devices, such as keyboards, trackballs, or mice. The use of touch panels may allow for simple manipulations by a user. Further, touch panels can provide various types of input buttons according to the types of application and/or for executing the applications. Touch panels have been widely used as input devices for various electronic devices, such as an automated teller machine (ATM), an information trader, ticket vending machines, mobile phones, personal digital assistants (PDA), portable multimedia player (PMP), digital cameras, portable games, MP3 players, and the like.

Touch panels may be classified as resistive film-type touch panels, capacitive-type touch panels, ultrasonic-type touch panels, infrared-type touch panels, and the like. Resistive film-type touch panels and capacitive-type touch panels are often employed in mobile devices.

Capacitive-type touch panels detect a user input based on variations in capacitance that may be caused by a touch or press thereon. However, it may be difficult to fabricate a flexible capacitive-type touch panel because capacitive-type touch panels normally detect a touch input if maintained in a certain external shape. Capacitive-type touch panels do not provide high touch resolution due to their discharge-based sensing mechanism.

Resistive film-type touch panels detect a user input by sensing a variation in resistance that may be caused by a touch or press thereon. Since there is an air gap between the lower and upper substrates of a resistive film-type touch panel, the resistive film-type touch panel may not detect a touch input if the panel is bent or folded. Accordingly, it may be difficult to fabricate a flexible resistive film-type touch panel. In addition, since a resistive film-type touch panel detects the position of a touch input using the ratio of X- and Y-axis resistance levels, it may be difficult to realize a multi-touch feature.

### SUMMARY

The present disclosure is directed to a touch panel that may be used as a flexible user interface and an electronic device including the touch panel, and a method for manufacturing the same.

The present disclosure is also directed to a touch panel that is double-sided with two touch surfaces, and may provide a double-sided touch technique, and a method of manufacturing the same.

According to one aspect, the invention provides a touch panel body device comprising a conductive rubber layer which is electrically responsive to a deformation of the conductive rubber layer. The term "electrically responsive" means that at least one electric characteristics such as the resistance changes when the conductive rubber layer is deformed. Additional aspects and features of the invention will be set forth in the description which follows, and in part will be apparent from the description, or may be learned by practice of the invention.

An exemplary embodiment provides a touch panel body device, comprising: a first substrate comprising a first electrode; a second substrate comprising a second electrode; a conductive rubber layer interposed between the first substrate and the second substrate, the conductive layer comprising a portion serially connected to the first electrode and comprising a variable resistance based on deformation of the conductive rubber layer; and a switching device serially connected to the portion of the conductive rubber layer and to the first electrode.

An exemplary embodiment provides a method for manufacturing an input touch device, comprising: arranging a first substrate comprising a first electrode; arranging a second substrate comprising a second electrode; interposing a conductive rubber layer between the first and second substrate, the conductive rubber layer comprising a variable resistance based on a deformation of the conductive rubber layer; serially connecting a portion of the conductive rubber layer to the first electrode; and serially connecting a switching device to the portion of the conductive rubber layer and the first electrode.

An exemplary embodiment provides a touch panel body device, comprising: a first surface and a second surface; a conductive rubber layer interposed between the first surface and the second surface; a diode serially connected to the conductive rubber layer and the first surface; wherein in a state of a deformation, the rubber layer allows current to flow from the first surface to the second surface, and in a state of non-deformation, the rubber layer blocks current from flowing from the first surface to the second surface.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an example of a touch panel according to an exemplary embodiment of the present invention.

FIG. 2 is an exploded perspective view illustrating an example of a touch panel body according to an exemplary embodiment of the present invention.

FIG. 3 is a cross-sectional view taken along line III-III' of FIG. 2 according to an exemplary embodiment of the present invention.

FIG. 4A and FIG. 4B are cross-sectional views illustrating a structure and the electrical properties of a sheet-type conductive rubber layer according to an exemplary embodiment of the present invention.

FIG. 5 is an equivalent circuit diagram illustrating a node of a touch panel body according to an exemplary embodiment of the present invention.

FIG. 6A and FIG. 6B are diagrams illustrating a pressed downstate of a touch panel body according to an exemplary embodiment of the present invention.

FIG. 7A and FIG. 7B are diagrams illustrating using a plurality of organic transistors according to an exemplary embodiment of the present invention.

FIG. 8A is an equivalent circuit diagram illustrating nodes formed between an upper electrode and a plurality of lower electrodes that intersect the upper electrode according to an exemplary embodiment of the present invention.

FIG. 8B is a graph illustrating the application of sensing signals to a plurality of upper electrodes according to an exemplary embodiment of the present invention.

FIG. 9 is a block diagram illustrating a control unit according to an exemplary embodiment of the present invention.

FIG. 10A is a cross-sectional view illustrating a touch panel body having an upper substrate that may be used as a touch surface according to an exemplary embodiment of the present invention.

FIG. 10B is a cross-sectional view illustrating a touch panel body having a lower substrate that may be used as a touch surface according to an exemplary embodiment of the present invention.

FIG. 11 is a block diagram illustrating an electronic device including a touch panel according to an exemplary embodiment of the present invention.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms including technical and scientific terms used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that for the purposes of this disclosure, "at least one of X, Y, and Z" can be construed as X only, Y only, Z only, or any combination of two or more items X, Y, and Z (e.g., XYZ, XYY, YZ, ZZ).

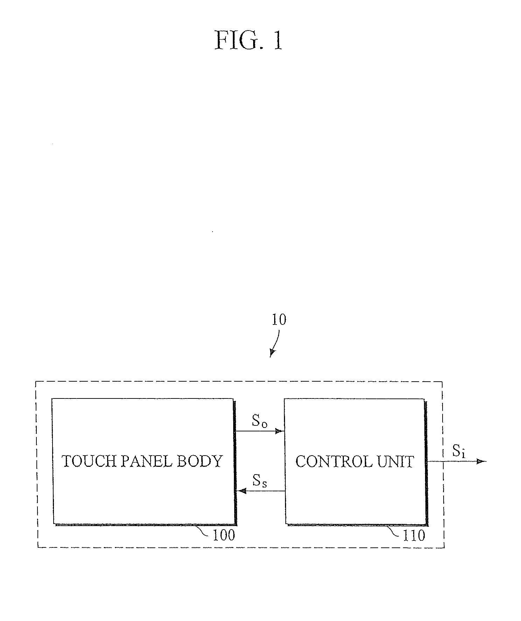

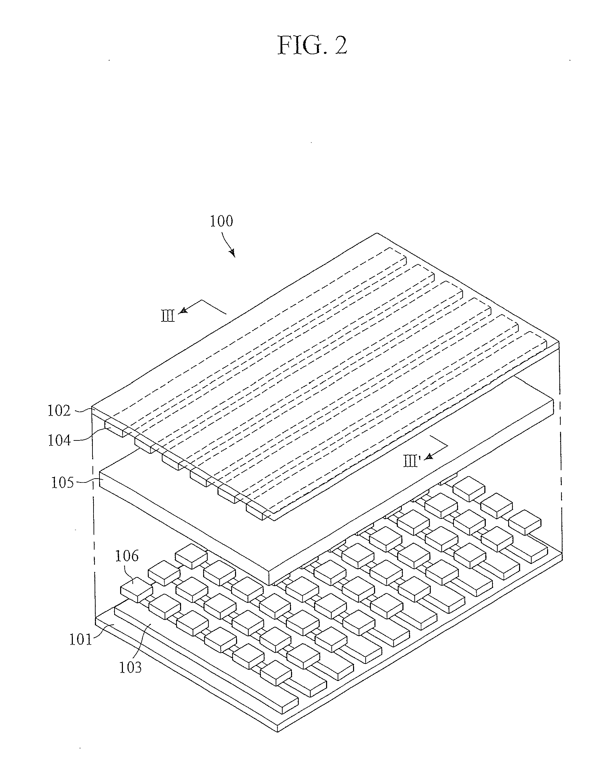

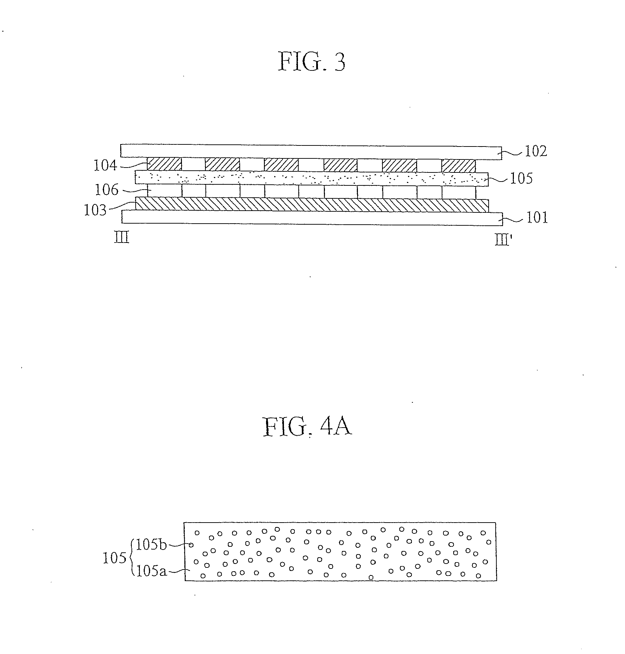

FIG. 1 is a diagram illustrating an example of a touch panel according to an exemplary embodiment of the present invention. FIG. 2 is an exploded perspective view illustrating an example of a touch panel body according to an exemplary embodiment of the present invention.FIG. 3 is a cross-sectional view taken along line III-III' of FIG. 2 according to an exemplary embodiment of the present invention.

Referring to FIG. 1, touch panel 10 includes a touch panel body 100 and a control unit110. The touch panel body 100 may refer to a physical structure that forms the touch panel 10. The control unit110 may be implemented as an electrical circuit and/or a combination of hardware and software, or only software for controlling the operation of the touch panel body 10. The term "touch panel," as used herein, may refer to the touch panel body 100, but may refer to the touch panel 10 including the control unit110. The structure of the touch panel body 100 is further described with reference to FIGS. 2 and 3.

Referring to FIG. 2 and FIG. 3, the touch panel body 100 includes a lower substrate 101, an upper substrate 102, a plurality of lower electrodes 103 and a plurality of upper electrodes 104 that are arranged between the lower substrate 101 and the upper substrate 102, and a plurality of organic transistors 105 and a conductive rubber layer 106 that are interposed between the lower substrate 101 and the upper substrate 102.

The lower substrate 101 may be a base substrate that forms the bottom of the touch panel body 100. The lower substrate 101 may be a rigid material such as, glass, or may be a flexible material such as, a polymer film. For example, in a case in which the touch panel 10 serves as a touch screen of an electronic device and there is a display (such as, a liquid crystal display (LCD) panel) attached onto the bottom of the touch panel 10, all, or some of the elements of the touch panel body 100 may be formed of a transparent material. In this case, the lower substrate 101may be the top surface of the display or may be a substrate additionally attached onto the top of the display.

The upper substrate 102 may be spaced a distance apart from the lower substrate 101, and may face the top of the touch panel body 100. The upper substrate 102 may also be a rigid material such as glass, or may be a flexible material, such as a polymer film. For example, in a case in which the touch panel 10 serves as a touch screen of an electronic device and there is a display attached onto the top of the touch panel 10, not all elements of the touch panel body 100 are formed of a transparent material. In this case, the upper substrate 102 may be the bottom of the display or may be a substrate additionally attached to the bottom of the display.

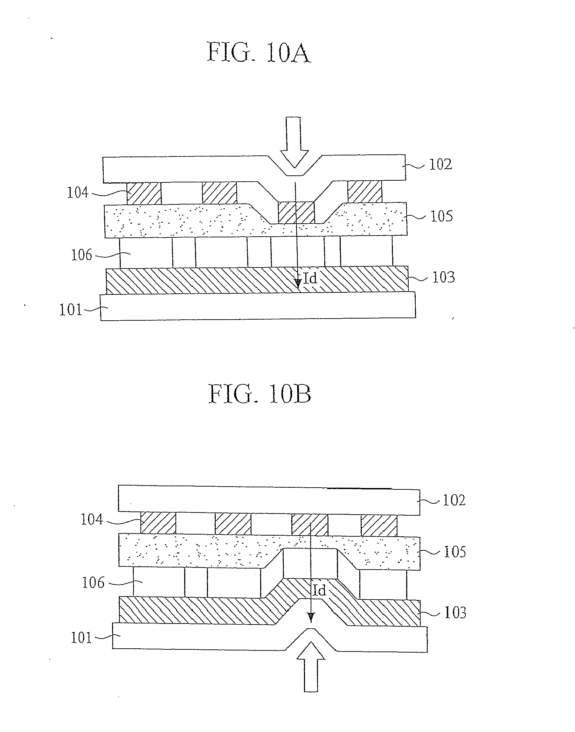

The top surface of the upper substrate 102 may provide a touch surface that may be directly or indirectly contacted for entering an input. For example, in a case in which the touch panel 10 is double-sided, both the top surface of the upper substrate 102 and the bottom surface of the lower substrate 101 may be used as the touch surface. In response to a force being applied to the top surface of the upper substrate 102 or the bottom surface of the lower substrate 101, the upper substrate 102 or the lower substrate 101 may be deformed, as shown in FIG. 10A and FIG. 10B. For example, in response to a user touching or pressing the touch surface with a pointing object, such as, a finger, a stylus pen or the like, the upper substrate 102 or the lower substrate 101 may be partially deformed.

The lower electrodes 103 may be arranged on the top surface of the lower substrate 101, and the upper electrodes 104 may be arranged on the bottom surface of the upper substrate 102. The lower electrodes 103 and the upper electrodes 104 may be arranged in an array or arranged in a matrix across all or most of the touch panel body 10. FIG. 2 illustrates an example of the lower electrodes 103 and the upper electrodes 104 arranged in a matrix. Referring to FIG. 2, a plurality of lower electrodes 103 may be arranged on the top surface of the lower substrate 101, and a plurality of upper electrodes 104 may be arranged on the bottom surface of the upper substrate 102. In this example, the lower electrodes 103 may extend in a first direction, and the upper electrodes 104 may extend in a second direction, which is substantially perpendicular to the first direction. A plurality of sensing electrode pairs may be defined at the intersections between the lower electrodes 103 and the upper electrodes 104. The lower electrodes 103 and the upper electrodes 104 may be a transparent or opaque conductive material. The lower electrodes 103 and the upper electrodes 104 may be different materials.

The organic transistors 105 and the conductive rubber layer 106 may be interposed between the lower substrate 101 and the upper substrate 102. For example, referring to FIG. 2, the organic transistors 105 and the conductive rubber layer 106 may be sequentially deposited on the lower electrodes 103. In another example, the conductive rubber layer 106 and the organic transistors 105 may be sequentially deposited on the lower electrodes 103.

The conductive rubber layer 105 may be a sheet, and may cover the entire surface of the touch panel body 100. In another example, the conductive rubber layer 105 may be in the same shape as the lower electrodes 103 or the upper electrodes 104, i.e., in a line shape. In another example, the conductive rubber layer 105 may be a spot shape. The conductive rubber layer 105 may be arranged at each intersection between the lower electrodes 103 and the upper electrodes 104. The conductive rubber layer 105 may transmit no electric current unless pressure is applied thereto. In response to pressure being applied to the conductive rubber layer 105 from above or below the conductive rubber layer 105, the conductive rubber layer 105 may transmit an electric current vertically. Thus, the conductive rubber layer 105 may have the properties of a variable resistor.

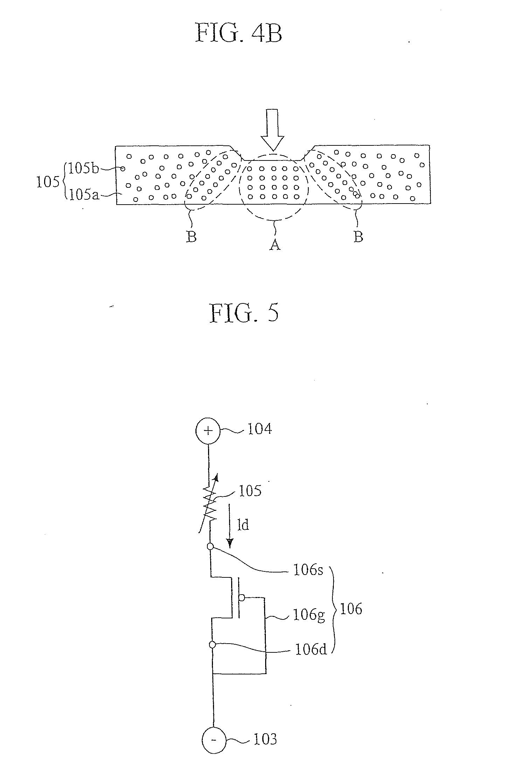

FIG. 4A and FIG. 4B are cross-sectional views illustrating a structure and the electrical properties of a sheet-type conductive rubber layer according to an exemplary embodiment of the present invention.

Referring to FIG. 4A and FIG. 4B, the conductive rubber layer 105 may include a base layer 105a that is a thin layer of an elastic material with a suitable dielectric property, i.e. elastic materials such as rubber and the like, and conductive particles 105b, such as carbon nanotubes and the like. A suitable dielectric property may be one that allows the conductive rubber layer 105 to be an insulator during a non-deformed state and a conductor during a deformed state. The conductive particles 105b may be interspersed in the base layer 105a. In FIG. 4A and FIG. 4B, the thickness of the conductive rubber layer 105 and the size of the carbon nanotubes 105b are exaggerated for clarity. For example, the carbon nanotubes 105b may be evenly distributed in the base layer 105a. Conversely, the carbon nanotubes 105b may be irregularly distributed in the base layer 105a.

Referring to FIG. 4A, in response to no force being applied to the conductive rubber layer 105, the conductive rubber layer 105 may be a dielectric insulator that does not transmit an electric current in any direction. Since the density of the carbon nanotubes 105b is low, the conductive rubber layer 105 may not transmit an electric current. Referring to FIG. 4B, in response to force being applied to the conductive rubber layer 105, the base layer 105a may be pressed down in the direction of the application of the force, thereby causing the distance between the carbon nanotubes 105b to decrease and to contact each other. Accordingly, the density of the carbon nanotubes 105b may increase in portion A of the conductive rubber layer 105, thereby causing the conductivity of the conductive rubber layer 105 to increase. This may allow portion A of the conductive rubber layer 105 to become an electric conductor that transmits an electric current in a vertical direction. Due to the electric properties of the conductive rubber layer 105, the conductivity of the conductive rubber layer 105 may increase in response to force being applied to the conductive rubber layer 105 from above the conductive rubber layer 105, below the conductive rubber layer 105, or both (see FIGS. 10A and 10B) so that the conductive rubber layer 105 may allow the transmission of an electric current in the vertical direction.

The organic transistors 106 may be formed at the intersections between the upper electrodes 104 and the lower electrodes 103 and may be arranged in a matrix. The organic transistors 106 may be field-effect thin film transistors (TFTs). The organic transistors 106 may have a similar structure as silicon-based field-effect TFTs, with a difference being that the organic transistors 106 may include a semiconductor layer for forming a channel, and that the semiconductor layer may be formed of an organic semiconductor material, instead of a silicon semiconductor material. Thus, detailed descriptions of the structure and the operating principle of the organic transistors 106 will be omitted. Due to the organic transistors 106 including a channel layer that is formed of an organic semiconductor material, they may be more flexible than silicon transistors. Accordingly, the organic transistors 106 may be suitable for use in the manufacture of a flexible device.

FIG. 5 is an equivalent circuit diagram illustrating a node of a touch panel body according to an exemplary embodiment of the present invention.

Referring to FIG. 5, the upper electrode 104 may be used as an anode, and the lower electrode 103 may be used as a cathode. The node may include a conductive rubber layer 105 that serves as a variable resistor between the upper electrode 104 and the lower electrode 103, and an organic transistor 106. The organic transistor 106 is a switching device connected to the conductive rubber layer 105 in series. The organic transistor 106 may include a gate 106g and a drain 106d that are electrically connected to each other, and this connection may allow the organic transistor 106 to serve as a diode.

For example, in a case in which the resistance of the conductive rubber layer 106 is low, which may cause a higher voltage than a threshold voltage Vₜₕ of the organic transistor 106 to be applied between a source 106s and the gate 106g of the organic transistor 106, a current Id may flow through the organic transistor 106. On the other hand, in a case in which the resistance of the conductive rubber layer 106 is high, which may cause a lower voltage than the threshold voltage Vₜₕ to be applied between the source 106s and the gate 106g, the organic transistor 106 may not allow current to flow.

The organic transistor 106 may switch a current that flows through the conductive rubber layer 105 to on or off. Due to the switching, the touch panel 10 may be prevented from malfunctioning. Referring to FIG. 4B, in response to a force being applied to the conductive rubber layer 105, the organic transistor 106 may allow the flow of a current through portion A, and may block the flow of a current through portion B (which is adjacent to or near portion A). Accordingly, only a portion of the touch panel body 100 that is pressed down may be detected as an input, and the rest of the touch panel body 100 may be prevented from being detected as an input, thereby preventing the touch panel 10 from malfunctioning or detecting an inaccurate input location.

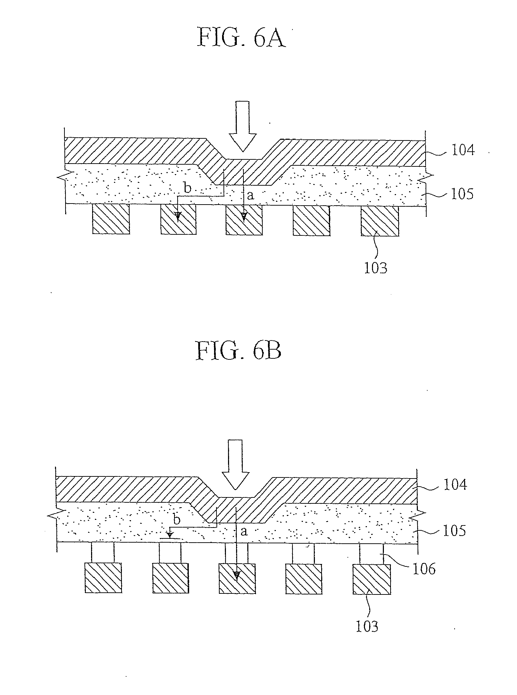

FIG. 6A and FIG. 6B are diagrams illustrating a pressed down state of a touch panel body according to an exemplary embodiment of the present invention.

As described above, fine conductive particles, such as carbon nanotubes 105b, may be distributed in the conductive rubber layer 105. Accordingly, the conductive rubber layer 105 may be a non-conductor, as shown in FIG. 4A, until force is applied thereto. Referring to FIG. 4B, in response to force being applied to the conductive rubber layer 105, the density of the carbon nanotubes 105b in a portion of the conductive rubber layer 105 that is pressed down by the force, i.e., portion A, may increase, and a current may flow vertically through the pressed-down portion of the conductive rubber layer 105. The density of the carbon nanotubes 105b may increase not only in portion A, but also in portion B near portion A. The density of the carbon nanotubes 105b may be lower in portion B than in portionA, but may be at a higher level than the rest of the conductive rubber layer 105.

As a result, referring to FIGS. 6A and 6B, a current may flow in path along and through portion b, i.e., an induced current may be generated near a portion of the conductive rubber layer 105 that is pressed down. The induced current may cause the touch panel 10 to malfunction, for example by recording an erroneous input touch location. Referring to FIG. 6A, a case in which the organic transistors 106 are not interposed between the conductive rubber layer 105 and an upper electrode 104 is shown, and thus, a current that is applied to the upper electrode 104 may flow into a plurality of lower electrodes 103, for example through portion b, if a location corresponding to portion a is pressed. Referring to FIG. 6B, in which a switching devices, such as organic transistors 106, are interposed between the conductive rubber layer 105 and the lower electrodes 103, the flow of a current along portion a may be allowed, and the flow of a current along portion b may be blocked or prevented by turning on an organic transistor 106 that is located on portion a and turning off an organic transistor 106 that is located on portion b. Referring to FIG. 5, the organic transistors 106 may operate like a diode. Since the resistance of the conductive rubber layer 105 is low on portion a, a voltage higher than a threshold voltage may be applied between the source 106s and the gate 106g of the organic transistor 106 on portion a. Since the resistance of the conductive rubber layer 105 is higher on portion b, a voltage lower than the threshold voltage may be applied between the source 106s and the gate 106g of the organic transistor 106 on path b. Accordingly, there may be a difference between the current applied to portion a and the current applied to portion b, and thus, the organic transistors 106 may be selectively switched on or off without performing a selective on/off scanning operation.

To reduce an induced current or prevent the generation of an induced current, the conductive rubber layer 105 may have a line shape or a spot shape. For example, in a case in which the conductive rubber layer 105 is in a line shape, an induced current may be generated in a direction in which the conductive rubber layer 105 extends. However, in this example, since the conductive rubber layer 105 is not in a direction that is perpendicular to the direction in which the conductive rubber layer 105 extends, no induced current may be generated in this direction. In a case in which the conductive rubber layer 105 is formed in a spot shape, the generation of an unnecessary induced current may be prevented because the conductive rubber layer 105 is arranged in specific portions of the touch panel 10.

The organic transistors 106 may prevent an inverse current from being generated in the touch panel body 100, i.e., a current between the plurality of lower electrodes 103 and the plurality of upper electrodes 104. That is, in response to an inverse current that flows from the lower electrodes 103 to the upper electrodes 104 being generated, the organic transistors 106 may block the flow of this inverse current. Since a continuous flow of an inverse current in the touch panel body 100, which includes the plurality of lower electrodes 103 and the plurality of upper electrodes 104, and has similar characteristics to a diode, may cause damage to the touch panel body 100, the flow or formation of inverse current may be prevented using the organic transistors 106. Thus, by preventing inverse current flow, an improvement to the durability and the reliability of the touch panel 10 may be realized.

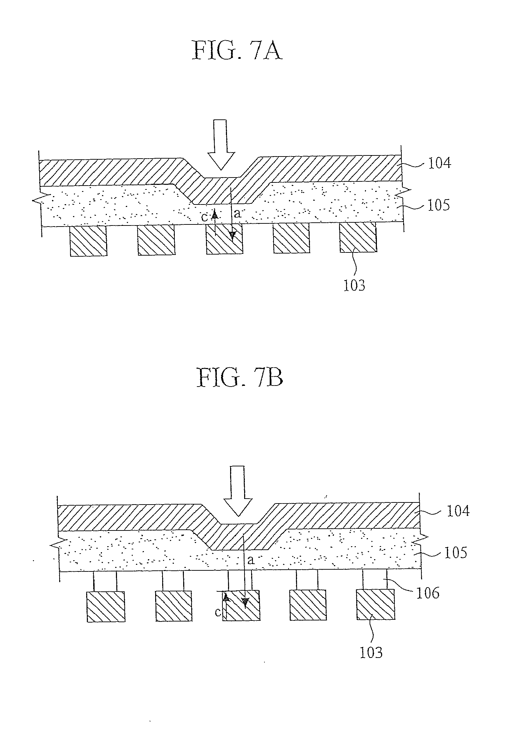

FIG. 7A and FIG. 7B are diagrams illustrating using a plurality of organic transistors according to an exemplary embodiment of the present invention.

Referring to FIG. 7A, if organic transistors 106 are not provided, a current may flow from an upper electrode 104 to a plurality of lower electrodes 103 along portion a and along portion c (which is the path of current flow in an opposite direction than that of portion a). On the other hand, referring to FIG. 7B, in a case in which the organic transistors 106 are provided, a current may flow from the upper electrode 104 to the lower electrodes 103 along portion a, but not from the lower electrodes 103 to the upper electrode 104 along portion c. Thus, providing an organic transistor 106 may help prevent inverse current flow.

Referring back to FIG. 1, the control unit110 may detect an input from a user from the touch panel body 100 to determine the location of the input. For example, the control unit110 may generate a sensing signal Sₛ, and may apply the sensing signal Sₛ to the touch panel body 100. The control unit110 may receive an output signal So of the touch panel body 100, and may detect an input from the user based on the output signal So. In response to an input from the user being detected, the control unit 110may output information of the detected input together with an input signal Sᵢ. The input signal Sᵢ may be an interrupt signal input to a touch processor of an electronic device, such as a touch panel 10. Power for generating the sensing signal Sₛ may be provided by a power supply of the electronic device.

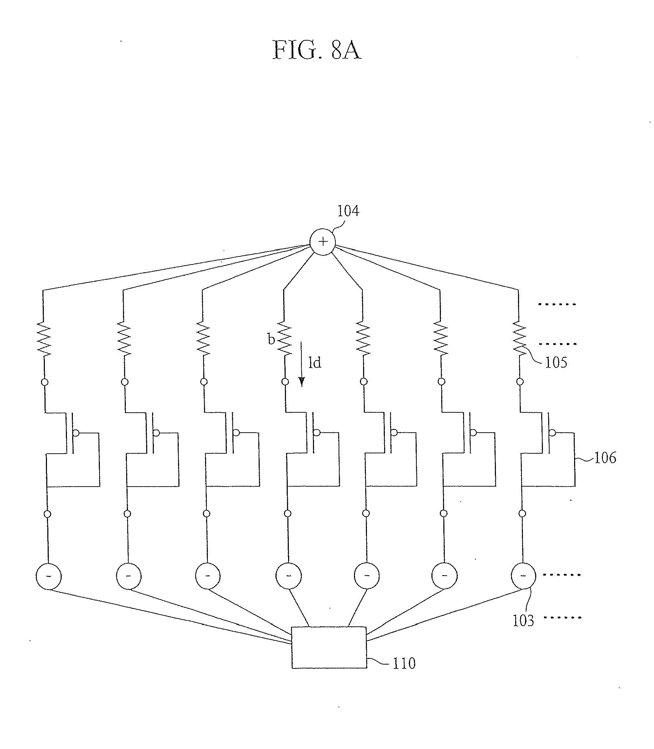

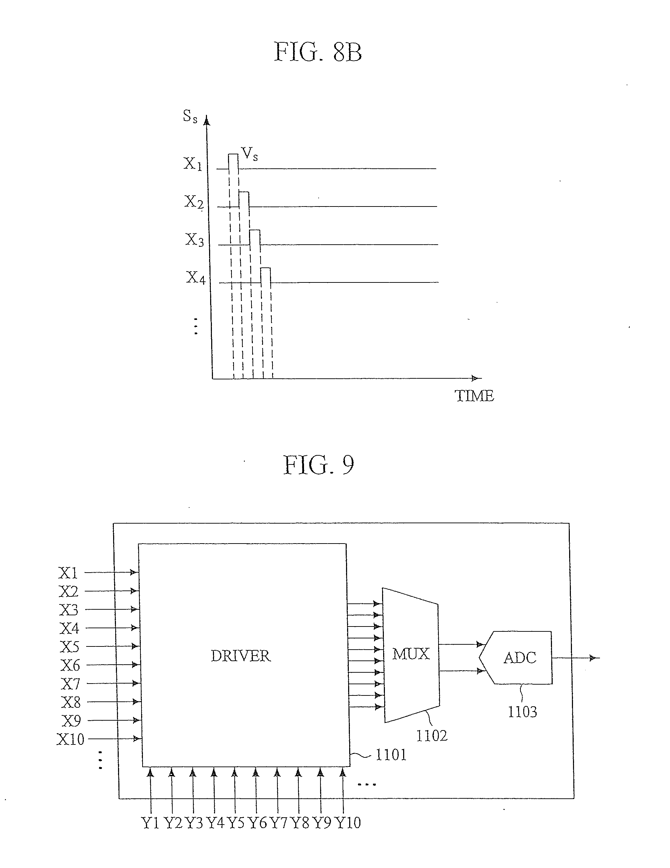

FIG. 8A is an equivalent circuit diagram illustrating nodes formed between an upper electrode and a plurality of lower electrodes that intersect the upper electrode according to an exemplary embodiment of the present invention. FIG. 8B is a graph illustrating the application of sensing signals to a plurality of upper electrodes according to an exemplary embodiment of the present invention.

Referring to FIG. 8B, the control unit110 may sequentially apply a pulse signal Vₛ to a plurality of upper electrodes X₁, X₂, X₃, X₄, ..., while scanning the upper electrodes X₁, X₂, X₃, X₄, .... In response to the application of the pulse signal Vₛ, a current may be detected from a lower electrode 103 that is connected to a node that receives an input from a user, i.e., a node at which the resistance of the conductive rubber layer 105 (i.e., a variable resistor) decreases, and no current may be detected from lower electrodes 103 that are connected to nodes that receive no input from the user, and at which the resistance of the conductive rubber layer 105 is relatively higher. For example, referring to FIG. 8A, in response to the application of the pulse signal Vₛ, a current Id may be detected from a fourth lower electrode 103, whereas no current may be detected from the other lower electrodes 103. Accordingly, the control unit110 may detect the location of an input from the user by detecting the current Id from the fourth lower electrode 103.

The control unit110 may perform a passive matrix scan, and thus detect the location of an input from the user by detecting a current from a node at which the resistance of the conductive rubber layer 105 decreases in response to the conductive rubber layer 105 being pressed down by the user.

FIG. 9 is a block diagram illustrating a control unit according to an exemplary embodiment of the present invention. In the exemplary embodiment illustrated in FIG. 9, the control unit110 may have a common circuit structure for detecting the location of an input by performing passive matrix scan.

Referring to FIG. 9, the control unit110 includes a driver 1101, a multiplexer (MUX) 1102, and an analog-to-digital converter (ADC) 1103.

The driver 1101 may be a touch panel driver interface that receives X- and Y-coordinates of each of a plurality of nodes that are arranged in a matrix, i.e., values representing the position of each of the upper electrodes 104 and the position of each of the lower electrodes 103. For example, in response to a touch input being applied to the touch panel body 100, an interrupt signal Sᵢ may be generated, and the driver 1101 may perform scanning in the order of X₁, X₂, X₃..., as shown in FIG. 8B. A scan sensing circuit may detect a physical contact, i.e., an input, from one of a plurality of columns Y₁, Y₂, Y₃.... A scan sensing signal obtained by the scanning operation performed by the driver 1101 may be applied to the MUX 1102. The MUX 1102 may receive multiple input signals, and may reduce the number of output signals through switching. The ADC 1103 may convert the scan sensing signal applied thereto via the MUX 1102 into a digital scan sensing signal.

As described above, the touch panel 10 may use the conductive rubber layer 106, which is a flexible elastic material, as a variable resistor, and may use the organic transistors 105, which also have elastic properties and allow for a more reliable operation, as a switching device. Accordingly, in a case in which the lower substrate 101 and the upper substrate 102 are a flexible material such as, a polymer film or the like, the touch panel 10 may become more flexible and endurable. Thus, the touch recognition performance of the touch panel 10 may be more reliable and less prone to deterioration, if the touch panel 10 is bent or folded. Moreover, the precision of touch recognition of the touch panel 10 may be maintained even if the touch panel 10 is bent or folded.

The touch panel 10 may be double-sided so that both surfaces of the touch panel 10 are implemented as touch surfaces. For example, as described above, to fabricate a flexible touch panel 10, the conductive rubber layer 105 and the organic transistors 106 may be disposed between the lower electrodes 103 and the upper electrodes 104. In this example, the top of the touch panel 10 may almost be indistinguishable from the bottom of the touch panel 10 so that both surfaces of the touch panel 10 may be used as touch surfaces, and that the resistance of the conductive rubber layer 106 may decrease by either a force being applied from the top of the touch panel 10 or a force being applied from the bottom of the touch panel 10.

FIG. 10A is a cross-sectional view illustrating a touch panel body having an upper substrate that may be used as a touch surface according to an exemplary embodiment of the present invention. FIG. 10B is a cross-sectional view illustrating a touch panel body having a lower substrate that may be used as a touch surface according to an exemplary embodiment of the present invention.

The conductive rubber layer 105 may be deformed by a force being applied from the top of the upper substrate 102, as shown in FIG. 10A, and from a force being applied from the bottom of the lower substrate 101, as shown in FIG. 10B, with the deformation causing a current Id to flow through the rubber conductive layer 105.

In the examples illustrated in FIGS. 1 through 10B, the touch panel 10 may be employed in various electronic devices as a user input device. For example, the touch panel 10 may be used as a touch pad of a notebook computer or a netbook computer. The touch panel 10 may also be used as a touch screen that is attached onto the top or bottom of a display of an electronic device. The touch panel 10 may be used as a touch screen of a portable electronic device, such as a mobile phone, a smart phone, a personal digital assistant (PDA), a portable multimedia player (PMP), an electronic book (e-book) terminal, a tablet computer or the like or a touch screen of an electronic device such as an automated teller machine (ATM), an interactive kiosk, a ticketing kiosk, or the like.

The touch panel 10 may also be usedas a user input device in various home appliances or various electronic devices for use in office environments. For example, even in a case in which the touch panel 10 is partially rolled, both the front and rear surfaces of an unrolled portion of the touch panel 10 may be used as a touch surface. Accordingly, the touch panel 10 may be used as a double-sided touch panel. In this example, a mirror image may be displayed on a transparent display that is provided at the front of the touch panel 10 so that the convenience of use of the rear surface of the rolled portion of the touch panel 10 as a user input device may be provided.

The touch panel 10 may also be used as an electronic device capable of recognizing pressure variations using the conductive rubber layer 105. The touch panel 10 may also be used as a user input device for various purposes by being combined with an electronic device that is equipped with a flexible display (such as, a book-shaped e-book terminal) or as a double-sided touch input device of an electronic device (such as, a gaming device or a graphic device).

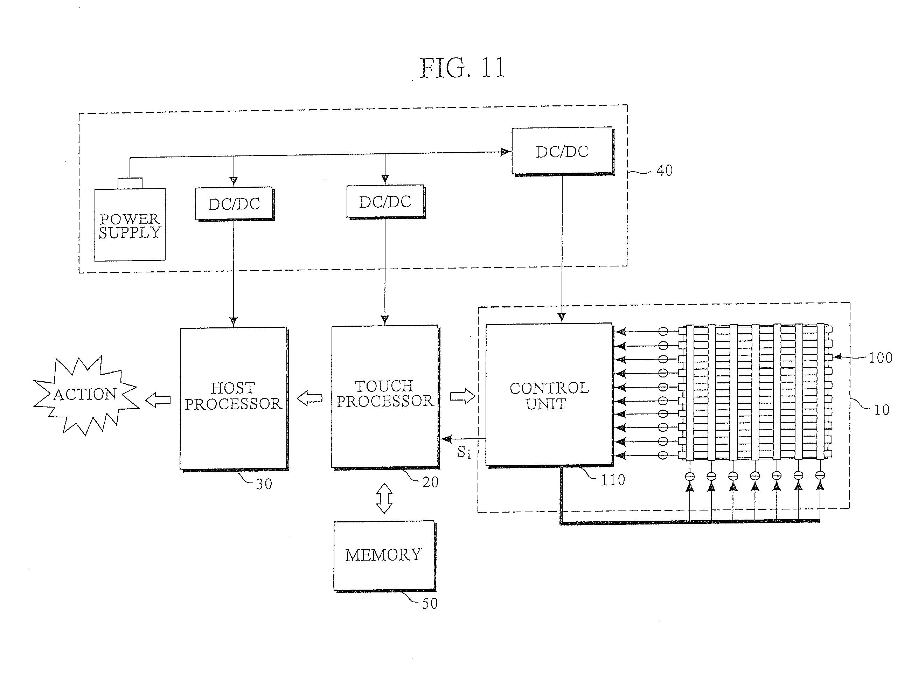

FIG. 11 is a block diagram illustrating an electronic device including a touch panel according to an exemplary embodiment of the present invention.

Referring to FIG. 11, the electronic device includes the touch panel 10, a touch processor 20, a host processor 30, a power supply 40, and a memory 50. The structure of the electronic device illustrated in FIG. 11 is exemplary, and the touch panel 10 may be applied to various electronic devices.

The touch panel 10 includes the touch panel body 100 and the control unit110. For example, in response to a touch input being received from a user, the conductive rubber layer 105 may temporarily contract (or be deformed) so that the resistance of the conductive rubber layer 105 may decrease. In this example, in response to a sensing pulse being applied to a node at a location where the touch input is detected, the voltage applied to the source of an organic transistor may be high enough due to the decrease in resistance, so that the organic transistor may be turned on.

Referring to FIG. 9, in response to a digital scan sensing signal being received from the control unit 110, the touch processor 20 may generate valid recognition information by mapping the digital scan sensing signal to data present in the memory 50. For example, the touch processor 20 may identify the type of information that is received via the touch panel 10, may search for a pattern corresponding to the identified information, and may extract information that is mapped to the identified information from the memory 50 and transmit the extracted information to the host processor 30.

Various patterns for various context information may be stored in the memory 50. The patterns stored in the memory 50 may be defined at the time of creation of a reference menu or application, and/or may be changed later by a user. The various patterns for various context information may be stored in an external storage device which stores data therein semi-permanently or a nonvolatile memory such as, for example, a read-only memory (ROM), a flash memory, or the like.

The host processor 30, which is a main processor of the electronic device or an application processor, may receive recognition information that is generated by the touch processor 20. The host processor 30 may process the received recognition information, and may generate an event based on the processed recognition information.

The power supply 40 may supply power to each element of the electronic device. The power supply 40 may be connected to each element of the electronic device either directly or via an alternating current (AC)/direct current (DC) converter and/or a DC/DC converter. The AC/DC converter may convert an AC voltage or current into a DC voltage or current. The DC/DC converter may convert a DC voltage or current provided by the power supply 40 or the AC/DC converter into an appropriate DC voltage or current for each element of the electronic device.

As described above, since a touch panel is manufactured using a conductive rubber layer and a plurality of organic transistors, the touch panel may be suitable for use in a flexible display, may be able to detect a user input even if bent or folded, or may be used as a double-sided touch panel. The touch panel may improve the convenience of use of a flexible display, and may be applied to a variety of applications. In addition, the touch panel may increase touch resolution according to the density of the organic transistors, and may improve the precision of detection of a user input. The touch panel may be applied to various user interfaces and applications, and may thus contribute to the development of an active display that may provide better reliability in touch detection.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A touch panel includes a first substrate having a plurality of lower electrodes; a second substrate spaced a distance apart from the lower substrate and having a plurality of upper electrodes that correspond to the lower electrodes; a conductive rubber layer interposed between the lower electrodes and the upper electrodes; and a plurality of organic transistors interposed between the lower electrodes and the upper electrodes and to be connected to a top or bottom portion of the conductive rubber layer.

## Claims

1. A touch panel body device, comprising
a conductive rubber layer which is electrically responsive to a deformation of the conductive rubber layer.

2. A touch panel body device, in particular according to claim 1, comprising:
a first substrate comprising a first electrode;
a second substrate comprising a second electrode;
a/the conductive rubber layer interposed between the first substrate and the second substrate, the conductive layer comprising a portion serially connected to the first electrode and comprising a variable resistance based on deformation of the conductive rubber layer; and
a switching device serially connected to the portion of the conductive rubber layer and to the first electrode.

3. The device according to claim 2, wherein the switching device is an organic thin-film transistor, or/and wherein the first electrode and the second electrode are arranged to cross perpendicular to each other.

4. The device according to one of claims 1 to 3, wherein the conductive rubber layer comprises a base layer and carbon nanotube particles interspersed within the base layer, wherein preferably a specific density of the carbon nanotube particles changes in response to an input touch.

5. The device according to one of claims 1 to 4, wherein the conductive rubber layer is in a line shape or a spot shape.

6. The device according to one of claims 2 to 5, further comprising:
a control unit to control a voltage of the second electrode.

7. The device according to one of claims 2 to 6, wherein the first substrate, the second substrate, the first electrode, the second electrode and the switching device are transparent and flexible, wherein preferably the first substrate and the second substrate are made of a polymer film.

8. A method for manufacturing an input touch device, comprising:
arranging a first substrate comprising a first electrode;
arranging a second substrate comprising a second electrode;
interposing a conductive rubber layer between the first and second substrate, the conductive rubber layer comprising a variable resistance based on a deformation of the conductive rubber layer;
serially connecting a portion of the conductive rubber layer to the first electrode; and
serially connecting a switching device to the portion of the conductive rubber layer and the first electrode.

9. The method according to claim 8, wherein the switching device is an organic thin-film transistor, or/and wherein the first electrode and the second electrode are perpendicular to each other.

10. The method according to claim 8 or 9, wherein the conductive rubber layer comprises a base layer having a dielectric property,and carbon nanotube particles interspersed within the base layer, wherein preferably a specific density of the carbon nanotube particles changes in response to an input touch.

11. The method according to one of claims 8 to 11, wherein the conductive rubber layer is in a line shape or a spot shape.

12. The method according to one of claims 8 to 11, further comprising:
providing a control unit to apply a voltage to the second electrode.

13. The method according to one of claims 8 to 12, wherein the first substrate, the second substrate, the first electrode, the second electrode and the switching device are transparent and flexible, wherein preferably the first substrate and the second substrate are made of a polymer film.

14. A touch panel body device, in particular according to claim 1, comprising:
a first surface and a second surface;
a/the conductive rubber layer interposed between the first surface and
the second surface;
a diode serially connected to the conductive rubber layer and the first surface;
wherein in a state of a deformation, the rubber layer allows current to flow from the first surface to the second surface, and in a state of non-deformation, the rubber layer blocks current from flowing from the first surface to the second surface.

15. The device according to claim 1 or 14, wherein the conductive rubber layer comprises carbon nanotubes.
